# EUROPÄISCHE PATENTSCHRIFT

(11) **EP 0 802 393 B1**
(45) Veröffentlichungstag und Bekanntmachung des Hinweises auf die Patenterteilung: **19.06.2002**
(21) Anmeldenummer: 97105826.8
(22) Anmeldetag: 09.04.1997
(51) Int. Cl.: G01B 5/00, G01B 5/008, G01B 7/008

(54) **Messeinrichtung zur Vermessung von Werkstücken**
Measuring device for measuring the dimensions of workpieces
Dispositif de mesure pour arpenter des pièces à usiner

(30) Priorität: 15.04.1996 DE 19614747
(43) Veröffentlichungstag der Anmeldung: 22.10.1997
(73) Patentinhaber: Carl Zeiss, 89518 Heidenheim (Brenz) (DE); Carl-Zeiss-Stiftung trading as Carl Zeiss, 89518 Heidenheim (Brenz) (DE)
(72) Erfinder: Leitenberger, Werner, 89520 Heidenheim (DE); Ott, Sabine, 70469 Stuttgart (DE)

(56) Entgegenhaltungen:
- EP-A- 0 026 274
- EP-A- 0 289 983
- EP-A- 0 368 648
- EP-A- 0 409 267
- EP-A- 0 470 370
- DE-A- 4 436 827
- US-A- 5 337 485

## Beschreibung

Die Erfindung betrifft eine Meßeinrichtung zur Vermessung von Werkstücken, umfassend ein Grundgestell mit einem Werkstückaufnehmer zur Aufnahme eines zu vermessenden Werkstücks und wenigstens eine Meßeinheit zur Vermessung des Werkstückes.

Derartige Meßeinrichtungen sind aus dem Stand der Technik bereits hinreichend bekannt. So gibt es beispielsweise sogenannte Portalmeßeinrichtungen die üblicherweise wie folgt aufgebaut sind. Sie umfassen ein Grundgestell in Form einer Grundplatte, auf der ein Werkstückaufnehmer befestigt ist. Über diesen kann ein zu vermessendes Werkstück auf der Grundplatte befestigt werden. Zur Vermessung des Werkstückes ist an der Grundplatte eine Portalmeßeinheit befestigt. Diese umfaßt zwei seitlich der Grundplatte befestigte Führungen, auf denen ein Portal geführt wird, das die Grundplatte komplett überspannt.Das Portal kann über die Führungen längs der Grundplatte bewegt werden. Der überspannende Teil des Portals weist seinerseits auf Führungen auf, auf denen ein Schlitten quer zur Grundplatte bewegt werden kann. Zusätzlich sind im Schlitten seinerseits Führungen vorgesehen, über die ein Meßarm mit einem daran befindlichen Tastkopf auf und ab bewegt werden kann. Über die beschriebene Mechanik der Portalmeßeinheit kann somit der Tastkopf in drei aufeinander senkrecht stehenden Richtungen bewegt werden. Über die Position des Tastkopfes kann ein zu vermessendes Werkstück in x-, y- und z-Richtung vermessen.

Desweiteren sind aus dem Stand der Technik auch sogenannte Ständermeßeinrichtungen bekannt. Die Ständermeßeinrichtungen unterscheiden sich gegenüber den Portalmeßeinrichtungen im wesentlichen lediglich in der Ausführung der Meßeinheit. Im Gegensatz zur Portalmeßeinrichtung weist die Meßeinheit hier einen Ständer auf, der auf einer seitlich des Grundgestelles befestigten Führung läuft, so daß der Ständer längs der Grundplatte bewegt werden kann. Der Ständer seinerseits ist mit Führungen versehen, so daß hieran ein Schlitten auf und ab bewegt werden kann. Der Schlitten wiederum verfügt über Führungen, über die ein horizontal liegender Meßarm mit einem daran befestigten Tastkopf quer zur Grundplatte bewegt werden kann. Mit der besagten Ständermeßeinrichtung lassen sich ebenfalls Werkstücke in drei aufeinander senkrecht stehenden Richtungen x, y und z vermessen.

Die Besonderheit der aus dem Stand der Technik bekannten Meßeinrichtungen ist darin zu sehen, daß die Meßeinheiten starr in ihrer Position befestigt sind. Portalmeßeinrichtungen beispielsweise, deren Meßarm senkrecht zur Grundplatte steht und damit auf das zu vermessende Werkstück abgesenkt wird, können deshalb nur unter Verwendung von relativ aufwendigen Tastköpfen schwer zu erreichende Meßpunkte, wie beispielsweise seitliche Bohrungen eines Werkstückes vermessen. Insbesondere ergeben sich Probleme, wenn mit ein und derselben Meßeinrichtung häufig verschiedene Werkstücke mit unterschiedlicher Geometrie vermessen werden, da hierfür oftmals viele spezielle Tastköpfe vorgesehen werden müssen.

Die europäische Patentanmeldung EP-A2 0 289 983 zeigt ein Koordinatenmeßgerät, bei dem an den Außenseiten eines Grundgestells fünf verschiedene Meßeinheiten vorgesehen sind, deren Meßtaster jeweils in den drei Koordinatenrichtungen bewegt werden können. Die Meßtaster sind jeweils an Meßarmen befestigt, deren Längsachse entweder parallel oder normal zur Horizontalebene ausgerichtet ist.

Die europäische Patentanmeldung EP-A1 0 026 274 zeigt ein Zahnflankenprüfgerät, mit einem Grundgestell mit Werkstückaufnehmer, sowie einer hiervon separaten Meßeinheit, die auf drei höhenverstellbaren Füßen gelagert ist. Über die höhenverstellbaren Füße läßt sich die Neigung des Meßarms der Meßeinheit gegenüber dem Werkstückaufnehmer verändern.

Die europäische Patentanmeldung EP-A2 0 368 648 zeigt eine Schleifmaschine für zylindrische Wafer- Kristallblöcke, mit der die Kristallblöcke in eine zylindrische Form geschliffen werden. Um die Achse des Kristallblocks möglichst optimal für den Schleifprozeß auszurichten, wird dieser zwischen zwei Spannern eingespannt und gedreht, wobei drei auf einer Schiene sitzende Längenmeßsensoren abgesenkt werden und kontinuierlich die Kontur des Kristallblockes in den unterschiedlichen Drehstellungen messen. Aufgrund der gemessenen Werte wird dann der Kristallblock ausgerichtet.

Die deutsche Offenlegungsschrift DE-A1 44 36 827 zeigt eine Innenschleifmaschine, deren Schleifwerkzeug am Ende einer drehbeweglich gelagerten Welle befestigt ist. Die Welle ist hierbei durch ein Magnetlager gelagert. Über Positionssensoren wird hierbei die Position der Welle bestimmt, wobei aus der Position und den Erregerströmen des Magnetlagers die Bearbeitungskraft ermittelt wird, um hieraus feststellen zu können, wenn es zwischen dem Schleifwerkzeug und dem Werkstück zu einer ungewollten Kollision kommt.

Die Europäische Patentanmeldung EP 0 409 267 A1 zeigt eine Meßmaschine zum Vermessen von Drehteilen, wobei die Meßmaschine einen mehrere Meßfühler umfassenden Schlitten aufweist, der an einer Säule in der vertikalen Richtung verfahren werden kann sowie einen in einer zweiten horizontalen Richtung verfahrbaren Werkstückschlitten aufweist, auf dem das zu vermessende Drehteil angeordnet ist. Gemäß einer Ausführungsvariante der Meßmaschine kann die Ausrichtung der Meßfühler verändert werden, indem diese über ein Drehgelenk gegenüber dem Schlitten verdreht werden, wobei die Drehachse des Drehgelenkes dazu gegenüber der Säulenlängsachse um 45° geneigt ist und die Längsachsen der Meßfühler wiederum um 45° gegenüber der Drehachse geneigt sind.

Die Aufgabe der vorliegenden Erfindung ist es deshalb die bekannten Meßeinrichtungen derart weiterzubilden, daß hierdurch die Vermessung von verschiedenen Werkstücken mit unterschiedlicher Geometrie mit ein und derselben Meßeinrichtung vereinfacht wird.

Die Aufgabe wird gemäß den Merkmalen des kennzeichnenden Teils des Anspruches 1 gelöst. Vorteilhafte Weiterbildungen der Erfindung sind gegenstand der abhängigen Ansprüche.

Der Grundgedanke der Erfindung ist darin zu sehen, daß die Meßeinheit zur Vermessung eines Werkstückes in wenigstens zwei unterschiedliche Positionen gebracht werden kann. Hieraus ergeben sich die besonderen Vorteile, daß die Meßeinheit entsprechend dem zu vermessenden Werkstück so angeordnet werden kann, daß die am Werkstück zu messenden Punkte möglichst einfach durch den Tastkopf zu erreichen sind. Darüberhinaus lassen sich in der Meßeinrichtung dem Bedarf entsprechend zwei oder mehr Meßeinheiten anbringen, so daß einerseits jede der Meßeinheiten gewisse Bereiche des zu vermessenden Werkstückes optimal messen kann und andererseits die gesamte Zeit zur Vermessung des Werkstücks reduziert wird, da zwei oder mehr Meßeinheiten gleichzeitig messen.

In einer ersten Ausführungsform der Meßeinrichtung ist die Meßeinheit in wenigstens zwei unterschiedlichen Positionen starr an dem Grundgestell befestigbar. Zur Veränderung der Position ist hierbei die starre Verbindung zu lösen und die Meßeinheit in einer anderen Position wieder starr zu befestigen. Die starre Verbindung zwischen den Meßeinheiten und dem Grundgestell kann hergestellt werden, indem die Meßeinheit an wenigstens einem Teil des Grundgestells befestigt wird, das die Meßeinheit in ihrer Position fixiert. Das die Meßeinheit fixierende Teil kann unterschiedlichste Ausführungsformen haben und beispielsweise in Form von Seitenteilen vorgesehen sein, die seitlich der Meßeinheit angeordnet sind. Die Meßeinheit kann über Befestigungsmittel, wie beispielsweise Schrauben, starr mit den Seitenteilen verbunden werden. Die Seitenteile können aber auch in Form von am Rand der Meßeinheiten verlaufenden schmalen Auflageflächen vorgesehen sein, auf denen die Meßeinheiten aufliegen und mit denen die Meßeinheiten verschraubt sind.

In einer zweiten erfindungsgemäßen Ausführungsform ist die Meßeinheit beweglich am Grundgestell der Meßeinrichtung befestigt. Das Grundgestell weist hierbei spezielle Einrichtungen auf, über die die Meßeinheiten in wenigstens zwei unterschiedliche Positionen bewegt werden können. Bei diesen Einrichtungen kann es sich beispielsweise um Führungen handeln entlang derer die Meßeinheit verschoben werden kann. Die Führungen können entweder geradlinig ausgeführt sein oder eine gekrümmte Form aufweisen. Es kann gleichfalls auch beispielsweise eine hydraulische Hebeinrichtung verwendet werden, die die Meßeinheit anhebt oder absenkt und die vorteilhafterweise zusätzlich einen ebenfalls hydraulisch gesteuerten Mechanismus zum Kippen der Meßeinheit in wenigstens einer Richtung aufweist.

Weitere Vorteile und Weiterbildungen der Erfindung werden in der folgenden Figurenbeschreibung erläutert.

Hierin zeigen:
- Figur 1: Meßeinrichtung mit rechteckig ausgeformten Seitenteilen zur starren Befestigung einer Meßeinheit;
- Figur 2: Meßeinrichtung mit rund ausgeformten Seitenteilen zur starren Befestigung einer Meßeinheit;
- Figur 3: Meßeinrichtung mit Führungen zur beweglichen Befestigung einer Meßeinheit.

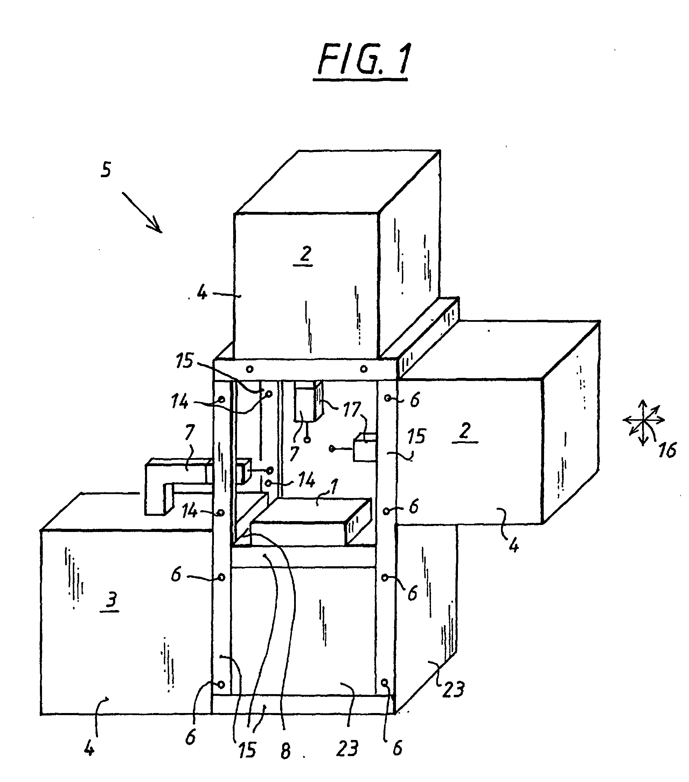

Figur 1 zeigt eine erfindungsgemäße Meßeinrichtung zur Vermessung von Werkstücken. Es sei an dieser Stelle erwähnt, daß es sich bei den Figuren 1-3 lediglich um nicht maßstabsgetreue Prinzipschaubilder handelt, bei denen weitgehend für die Erfindung unwesentliche Details weggelassen wurden. Die in Figur 1 gezeigte Meßeinrichtung ist jeweils so ausgestaltet, daß die Meßeinheiten (2, 3) in wenigstens zwei unterschiedlichen Positionen starr an einem Grundgestell (Seitenteile 15, Deckplatten 23, Grundplatte 8) der Meßeinrichtung befestigt werden können. Hierzu weist das Grundgestell der Meßeinrichtung u.a. zwei im wesentlichen gegenüberliegende Seitenteile (15) mit einer rechteckigen Form auf, an denen die Meßeinheiten (2, 3) starr befestigt sind. Dazu sind in den Seitenteilen eine Vielzahl von hier nur teilweise gezeigten Löchern (14) vorgesehen, durch die hindurch die Meßeinheiten (2, 3) über Schrauben (6) starr mit den Seitenteilen (15) verbunden werden können. Die Löcher dieses speziellen Ausführungsbeispiels sind in den Seitenteilen (15) jeweils derart vorgesehen, daß sie paarweise gleiche Abstände aufweisen. In den Seitenwänden der Behälter (4) der Meßeinheiten (2, 3) sind entsprechend ebenfalls Löcher vorgesehen, so daß die Behälter problemlos über Schrauben und Muttern an den Seitenteilen (15) in ihrer optimalen Lage befestigt werden können. Nach dem Entfernen der Meßeinheit (3) kann beispielsweise ohne weiteres eine der beiden Meßeinheiten (2) oder eine zusätzliche Meßeinheit (2) in den noch freien Löchern (14) des Seitenteils (15) montiert werden.

Neben den Seitenteilen (15) weist das Grundgestell der Meßeinrichtung zusätzlich noch die Deckplatten (23) auf, die über hier nicht näher gezeigte Befestigungseinrichtungen, wie beispielsweise Schrauben an den Seitenteilen (15) befestigt sind. Zwischen den Seitenteilen (15) befindet sich zusätzlich noch eine Grundplatte (8), die hier als Block ausgeführt ist, auf der ein Werkstückaufnehmer (1) befestigt ist. Dieser dient zur Aufnahme des zu messenden Werkstückes. Der Werkstückaufnehmer ist in dieser besonderen Ausführungsform als ebene Platte ausgeführt auf der das zu vermessende Werkstück angeordnet werden kann. Selbstverständlich kann der Werkstückaufnehmer (1) auch anders ausgeführt sein. Beispielsweise kann auf der hier gezeigten Platte auch eine Spannvorrichtung vorgesehen sein, über die beispielsweise das zu messende Werkstück festgespannt werden kann.

Auch die Meßeinheiten (2, 3) sind der Einfachheit halber nur schematisch gezeichnet. Sie umfassen Behälter (4) die der Kapselung der Meßeinheiten (2,3) dienen und Meßarme (7), an deren Spitze sich ein Tastkopf (17) befindet, mit dem ein zu vermessendes Werkstück vermessen werden kann. Die Meßarme (7) sind hierbei in den Behältern (4) mit einer entsprechenden Mechanik verbunden, so daß die Meßarme (7) in drei senkrecht aufeinander stehenden Richtungen x, y und z (vgl. Pfeil 16) bewegt werden können. Der Aufbau einer solchen Mechanik kann, wie oben in zusammenhang mit den Portalmeßeinrichtungen oder den Ständermeßeinrichtungen beschrieben ausgeführt sein. Das zu vermessende Werkstück kann hierbei gemessen werden, indem die Spitzen der Tastköpfe (17) an den entsprechenden Stellen des zu vermessenden Werkstückes antasten und hierzu die Auslenkung in den unterschiedlichen Achsen x, y und z gegenüber einem Referenzpunkt gemessen wird. Meßeinheiten der genannten Art sind bereits seit längerem bekannt und werden beispielsweise von der Firma Carl Zeiss hergestellt, so daß auf eine detailliertere Beschreibung der Meßeinheiten (2, 3) mit der dazugehörigen Mechanik und Elektronik verzichtet wird.

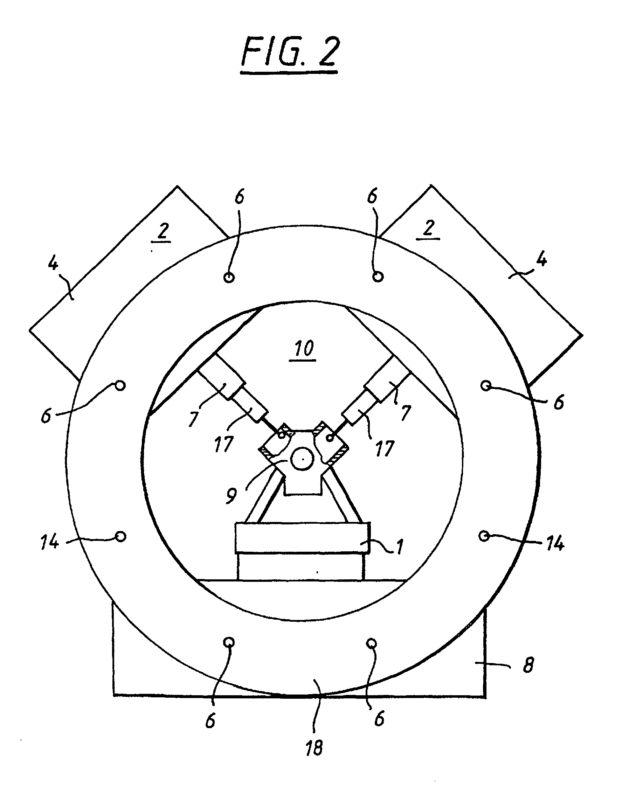

Figur 2 zeigt eine Weiterbildung der Meßeinrichtung gemäß Figur 1, die eine besonders vorteilhafte Ausführungsform der Erfindung darstellt. Bei der gezeigten Meßeinrichtung (10) ist ebenfalls ein Grundgestell vorgesehen, bei dem Meßeinheiten (2) an zwei im wesentlichen gegenüberliegenden Seitenteilen (18), die eine gekrümmte Form aufweisen, in wenigstens zwei Positionen befestigt werden können. Die Seitenteile (18) sind für das hier gezeigte Ausführungsbeispiel kreisringförmig ausgestaltet und mit einer Vielzahl von Löchern (14) versehen, die alle den gleichen Abstand zueinander haben. Wie bereits im Zusammenhang mit Figur 1 beschrieben, werden die Meßeinheiten (2), die analog zu den Meßeinheiten (2) der Figur 1 aufgebaut sind über Schrauben (6) und dazugehörige, hier nicht näher gezeigte Muttern starr an den Seitenteilen (18) befestigt. Das Grundgestell der Meßeinrichtung (10) gemäß Figur 2 weist neben den Seitenteilen (18) eine Grundplatte (8) auf, die über Schrauben (6) ebenfalls starr mit den Seitenteilen (18) verbunden ist. Auf der Grundplatte (8) befindet sich ein hier nicht näher beschriebener Werkstückträger (1), auf dem sich beispielhaft ein Motorblock (9) mit v-förmig angeordneten Zylindern befindet. Des besseren Verständnisses wegen sind zwei der Zylinder im Aufriß gezeichnet, um hierdurch zeigen zu können, wie die Spitzen der Tastköpfe die Bohrungen der Zylinder abtasten.

Die in der Figur 2 gezeigte Meßeinrichtung weist gegenüber der in der Figur 1 gezeigten Meßeinrichtung den Vorteil auf, daß die Meßarme (7) und somit die Tastköpfe (17) nicht nur senkrecht oder parallel zur Grundplatte (8) angeordnet werden können, sondern auch in Bereichen zwischen diesen beiden Positionen liegen können. Hierdurch können, wie dies Figur 2 verdeutlicht, auch problemlos mit einfachen Tastköpfen beispielsweise Bohrungen vermessen werden, zu deren Vermessung mit einem senkrecht oder parallel zur Grundplatte (8) liegenden Meßarm (7) spezielle, aufwendige Tastköpfe benötigt würden. Die Einstellung des Winkels, in dem der Meßarm (7) zu der Grundplatte (8) steht, kann noch feiner eingestellt werden, wenn in den Seitenteilen (18) zusätzlich weitere Bohrungspaare mit dem definierten Abstand vorgesehen werden. Für kleine Bereiche läßt sich der besagte Winkel besonders fein einstellen, wenn die entsprechenden Bohrungen (14) in Form von Langlöchern vorgesehen werden, so daß die Meßeinheiten (2) in diesen Langlöchern fein justiert werden können.

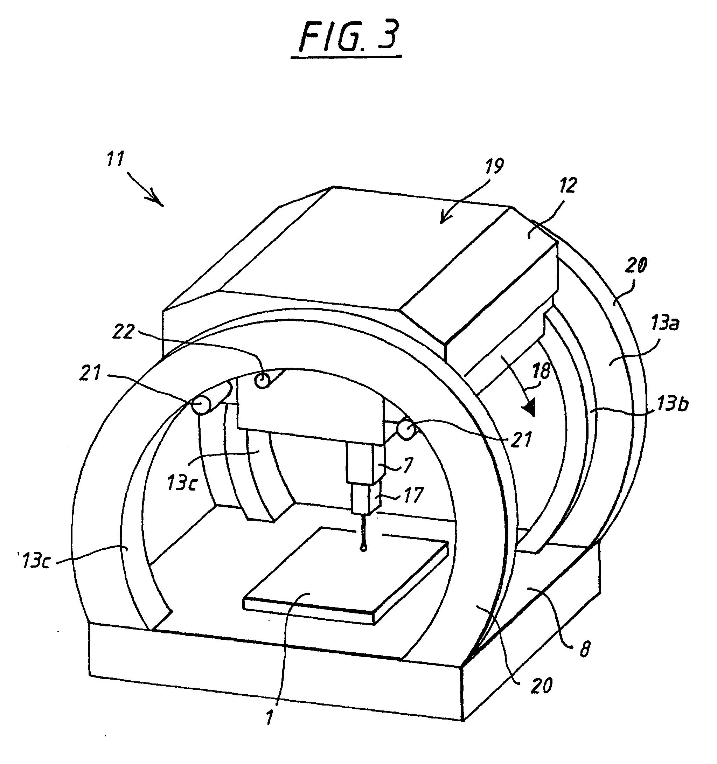

Figur 3 zeigt eine zweite Ausführungsform einer erfindungsgemäßen Meßeinrichtung. Die hierin gezeigte Meßeinheit (19) ist über Führungen (13a, 13b, 13c) der Seitenteile (20) beweglich auf am Grundgestell (Grundplatte 8, Seitenteile 20) befestigt. Die Führungen (13b, 13c) weisen hierbei eine gekrümmte Form auf, so daß sich beim Bewegen des Behälters (12) entlang der Führungen (13b, 13c) der Winkel des Meßarms (7) und des Tastkopfes (17) gegenüber der Grundplatte (8) kontinuierlich ändert. Um den Behälter (12) der Meßeinheit (19) über die Führungen (13a, 13b, 13c) bewegen zu können, weist der Behälter (12) hier nicht näher gezeigte gummibeschichtete Rollen auf, die auf den Führungen (13a, 13b) laufen und zur Bewegung der Meßeinheit (19) über einen entsprechend in der Meßeinheit (19) vorgesehenen Schrittmotor angetrieben werden. Um einen sicheren Halt des Behälters (12) zu gewährleisten, sind zusätzlich freilaufende Rollen auf den Führungen (13c) vorgesehen, die gegen die Führungen (13c) gepreßt werden und damit die Haftung der gummibeschichteten Rollen auf den Führungen (13b) sicherstellen. Zusätzlich ist in der Meßeinheit (19) eine Klemmeinrichtung vorgesehen, mit der die Meßeinheit (19) temporär starr mit den Führungen (13c) und damit natürlich auch mit dem Grundgestell (Grundplatte 8, Seitenteile 20) verbunden werden kann. Eine derartige Klemmeinrichtung ist hier in Form von zwei Gummiklötzen (22) vorgesehen, die jeweils elektronisch gesteuert auf die Führungen (13c) der Seitenteile (20) gepreßt werden, so daß die Meßeinheit (19) bedingt durch die Haftkraft starr mit den Führungen (13c) und damit mit dem Grundgestell (Grundplatte 8, Seitenteile 20) verbunden ist. Hierdurch ergibt sich der Vorteil, daß die Meßeinheit (19) unproblematisch über einen längeren Zeitraum definiert in einer Lage fixiert werden kann.

Obwohl die in Figur 3 gezeigte Meßeinrichtung im Vergleich zu den Meßeinrichtungen gemäß Figur 1 und 2 relativ kostenaufwendig ist, besitzt diese dennoch den besonderen Vorteil, daß der Winkel des Meßarms (7) und des Tastkopfes (17) gegenüber der Grundplatte (8) sehr fein und auch sehr schnell über eine entsprechende elektronische Steuerung eingestellt werden kann, so daß die in Figur 3 gezeigte Meßeinrichtung flexibel hinsichtlich der Vermessung von verschiedenen Werkstücken mit unterschiedlicher Geometrie ist. Hierdurch eignet sich die gezeigte Meßeinrichtung insbesondere für den Einsatz in Prüfstraßen, in denen sich die Geometrie der zu vermessenden Werkstücke häufig ändert.

In einer dritten hier nicht näher gezeigten Ausführungsform kann die Meßeinheit gleichfalls beweglich am Grundgestell befestigt werden, indem diese auf einer Hebeeinrichtung befestigt ist, die die Meßeinheit anheben kann. Um den Winkel des Meßarms und des Tasters der Meßeinheit gegenüber der Grundplatte verändern zu können, sollte die Hebeeinrichtung zusätzlich eine Kippeinrichtung aufweisen, mit der die Meßeinheit in wenigstens einer Richtung gekippt werden kann. Beispielsweise kann, wie dies dem Fachmann bereits hinreichend bekannt ist, in Form einer hydraulisch gesteuerten Hebebühne vorgesehen sein, wobei auf der Hebebühne zusätzlich eine kippbare Platte vorgesehen ist, die ebenfalls über eine Hydraulik gekippt wird. Auf der kippbaren Platte ist die Meßeinheit montiert.

Die Erfindung ist nicht auf die beschriebenen Ausführungsformen beschränkt sondern soll selbstverständlich auch sämtliche. Darüberhinaus können selbstverständlich auch die gezeigten Werkzeugträger entsprechend den Anforderungen ausgestaltet werden, und beispielsweise in Form eines Drehtisches oder in Form eines Palettensystems ausgestaltet sein. Auch das Grundgestell muß nicht, wie durchgängig gezeigt aus einer Grundplatte mit Seitenteilen bestehen, sondern kann selbstverständlich auch anders aufgebaut sein. Auch die Tastköpfe müssen nicht wie gezeigt als berührende Tastköpfe ausgeführt sein, sondern können beispielsweise als optische Tastköpfe vorgesehen werden.

Wie aus den Figuren 1-3 zu ersehen ist, lassen sich die Meßeinrichtungen (2) und (3) derart in unterschiedliche Positionen bringen, daß der Winkel zwischen der Längsachse der betreffenden Meßarme (7) und einer Horizontalebene, deren Ausrichtung durch die Fläche definiert wird, auf der das Grundgestell aufgestellt ist, in den unterschiedlichen Positionen unterschiedlich ist.

## Patentansprüche

1. Meßeinrichtung zur Vermessung von Werkstücken, umfassend ein Grundgestell (15;18;8,20) mit einem Werkstückaufnehmer (1) zur Aufnahme eines zu vermessenden Werkstückes (9) und wenigstens eine Meßeinheit (2,3,19) mit einem in drei aufeinander senkrecht stehenden Richtungen beweglichen Meßarm (7) zur Vermessung des Werkstückes (9) und einer Mechanik zum Bewegen des Meßarms (7) in den drei aufeinander senkrecht stehenden Richtungen, wobei die Meßeinheit (2,3,19) am Grundgestell (8,15,18,20) befestigt ist und von diesem getragen wird **dadurch gekennzeichnet, daß** die Meßeinheit in wenigstens zwei unterschiedliche Positionen gegenüber dem Grundgestell bringbar ist, sodaß der Winkel zwischen der Längsachse des Meßarms (7) und einer Horizontalebene in den unterschiedlichen Positionen ebenfalls unterschiedlich ist.

2. Meßeinrichtung nach Anspruch 1, **dadurch gekennzeichnet, daß** die Meßeinheit in wenigstens zwei Positionen starr am Grundgestell (8,15,18) befestigbar ist.

3. Meßeinrichtung nach Anspruch 2, **dadurch gekennzeichnet, daß** das Grundgestell zwei im wesentlichen gegenüberliegende Seitenteile (15,18) aufweist, an denen die Meßeinheit befestigt ist.

4. Meßeinrichtung nach Anspruch 3, **dadurch gekennzeichnet, daß** die Seitenteile (18) eine gekrümmte Form aufweisen.

5. Meßeinrichtung nach Anspruch 3, **dadurch gekennzeichnet, daß** die Seitenteile (15) eine rechteckige Form aufweisen.

6. Meßeinrichtung nach Anspruch 1, **dadurch gekennzeichnet, daß** die Meßeinheit beweglich am Grundgestell (8,18) befestigt ist.

7. Meßeinrichtung nach Anspruch 6, **dadurch gekennzeichnet, daß** zwei im wesentlichen gegenüberliegende Führungen (20) vorgesehen sind, auf denen die Meßeinheit befestigt ist.

8. Meßeinrichtung nach Anspruch 7, **dadurch gekennzeichnet, daß** die Führungen eine gekrümmte Form aufweisen.

9. Meßeinrichtung nach Ansprüchen 7-8, **dadurch gekennzeichnet, daß** die Meßeinheit zusätzlich Klemmeinrichtungen (22) aufweist, mit denen die Meßeinheit temporär starr mit dem Grundgestell verbunden werden kann.

10. Meßeinrichtung nach Anspruch 6, **dadurch gekennzeichnet, daß** die Meßeinrichtung auf einer Hebeeinrichtung befestigt ist, die die Meßeinrichtung anheben kann.

11. Meßeinrichtung nach Anspruch 10, **dadurch gekennzeichnet, daß** die Hebeeinrichtung zusätzlich eine Kippeinrichtung aufweist, über die die Meßeinheit zusätzlich in wenigstens einer Richtung gekippt werden kann.

## Claims

1. Measuring device for measuring workpieces, comprising a base frame (15; 18; 8, 20) having a workpiece holder (1) to hold a workpiece (9) to be measured, and at least one measuring unit (2, 3, 19) having a measuring arm (7) which can be moved in three mutually perpendicular directions to measure the workpiece (9), and a mechanism to move the measuring arm (7) in the three mutually perpendicular directions, the measuring unit (2, 3, 19) being fixed to the base frame (8, 15, 18, 20) and being carried by the latter, **characterized in that** the measuring unit can be brought into at least two different positions with respect to the base frame, so that the angle between the longitudinal axis of the measuring arm (7) and a horizontal plane is likewise different in the different positions.

2. Measuring device according to Claim 1, **characterized in that** the measuring unit can be fixed rigidly in at least two positions to the base frame (8, 15, 18).

3. Measuring device according to Claim 2, **characterized in that** the base frame has two substantially opposite side parts (15, 18), to which the measuring unit is fixed.

4. Measuring device according to Claim 3, **characterized in that** the side parts (18) have a curved shape.

5. Measuring device according to Claim 3, **characterized in that** the side parts (15) have a rectangular shape.

6. Measuring device according to Claim 1, **characterized in that** the measuring unit is fixed to the base frame (8, 18) such that it can be moved.

7. Measuring device according to Claim 6, **characterized in that** two substantially opposite guides (20) are provided, on which the measuring unit is fixed.

8. Measuring device according to Claim 7, **characterized in that** the guides have a curved shape.

9. Measuring device according to Claims 7-8, **characterized in that** the measuring unit additionally has clamping devices (22), with which the measuring unit can temporarily be connected rigidly to the base frame.

10. Measuring device according to Claim 6, **characterized in that** the measuring device is fixed to a lifting device, which can lift the measuring device.

11. Measuring device according to Claim 10, **characterized in that** the lifting device additionally has a tilting device, via which the measuring unit can additionally be tilted in at least one direction.

## Revendications

1. Dispositif de mesure pour mesurer des pièces, comprenant un châssis de base (15; 18; 8, 20) avec un porte-pièce (1) destiné à recevoir une pièce à mesurer (9) et au moins une unité de mesure (2, 3, 19) avec un bras de mesure (7) mobile dans trois directions orientées perpendiculairement les unes aux autres pour la mesure de la pièce (9) et avec un mécanisme pour mouvoir le bras de mesure (7) dans les trois directions orientées perpendiculairement les unes aux autres, dans lequel l'unité de mesure (2, 3, 19) est fixée au châssis de base (8, 15, 18, 20) et est supportée par celui-ci, **caractérisé en ce que** l'unité de mesure peut être amenée dans au moins deux positions différentes par rapport au châssis de base, de telle manière que l'angle entre l'axe longitudinal du bras de mesure (7) et un plan horizontal dans les différentes positions soit également différent.

2. Dispositif de mesure suivant la revendication 1, **caractérisé en ce que** l'unité de mesure peut être fixée de façon rigide au châssis de base (8, 15, 18) dans au moins deux positions.

3. Dispositif de mesure suivant la revendication 2, **caractérisé en ce que** le châssis de base présente deux pièces latérales (15, 18) qui se font sensiblement face, auxquelles l'unité de mesure est fixée.

4. Dispositif de mesure suivant la revendication 3, **caractérisé en ce que** les pièces latérales (18) présentent une forme courbe.

5. Dispositif de mesure suivant la revendication 3, **caractérisé en ce que** les pièces latérales (15) présentent une forme rectangulaire.

6. Dispositif de mesure suivant la revendication 1, **caractérisé en ce que** l'unité de mesure est fixée de façon mobile au châssis de base (8, 18).

7. Dispositif de mesure suivant la revendication 6, **caractérisé en ce qu'**il est prévu deux guides (20) se faisant sensiblement face, sur lesquels l'unité de mesure est fixée.

8. Dispositif de mesure suivant la revendication 7, **caractérisé en ce que** les guides présentent une forme courbe.

9. Dispositif de mesure suivant les revendications 7-8, **caractérisé en ce que** l'unité de mesure présente en plus des dispositifs de serrage (22), avec lesquels l'unité de mesure peut être temporairement assemblée de façon rigide au châssis de base.

10. Dispositif de mesure suivant la revendication 6, **caractérisé en ce que** le dispositif de mesure est fixé sur un dispositif de levage, qui peut soulever le dispositif de mesure.

11. Dispositif de mesure suivant la revendication 10, **caractérisé en ce que** le dispositif de levage présente en outre un dispositif de basculement, par lequel l'unité de mesure peut en outre être inclinée dans au moins une direction.
